Europäisches Patentamt

**European Patent Office**

Office européen des brevets

(19)

(11) Numéro de publication : **0 089 259**
**B1**

(12)

# FASCICULE DE BREVET EUROPÉEN

(45) Date de publication du fascicule du brevet :
21.11.85

(21) Numéro de dépôt : 83400395.6

(22) Date de dépôt : 25.02.83

(51) Int. Cl.⁴ : **B 64 C   1/32**

(54) Dispositif de maintien d'un cordeau détonant contre un élément transparent de verrière d'avion.

(30) Priorité : 04.03.82 FR 8203609

(43) Date de publication de la demande :
21.09.83 Bulletin 83/38

(45) Mention de la délivrance du brevet :
21.11.85 Bulletin 85/47

(84) Etats contractants désignés :
DE GB IT NL

(56) Documents cités :
FR-A- 2 121 843
US-A- 3 248 072

(73) Titulaire : SOCIETE NATIONALE INDUSTRIELLE
AEROSPATIALE Société dite:
37 Boulevard de Montmorency
F-75781 Paris Cedex 16 (FR)

(72) Inventeur : Devienne, Jules Henri Paul
10 Av. Carnot
F-78500 Sartrouville (FR)

(74) Mandataire : Mongrédien, André et al
c/o BREVATOME 25, rue de Ponthieu
F-75008 Paris (FR)

Jouve, 18, rue St-Denis, 75001 Paris, France

Description

La présente invention a pour objet un dispositif de maintien d'un cordeau détonant contre un élément transparent de verrière d'avion pour en assurer le découpage et l'éjection.

Il existe déjà de nombreux dispositifs pyrotechniques de fracture de glace et/ou de transparent d'avion qui permettent une découpe et une évacuation plus rapides que les systèmes d'évacuation conventionnels tels que le largage mécanique de verrière par exemple.

Parmi les nombreux systèmes d'évacuation pyrotechniques, on peut citer notamment le brevet français FR-A-2 121 843 qui a pour objet un système d'évacuation dans lequel la rupture de la verrière est obtenue à l'aide d'un cordeau détonant placé à l'intérieur d'une gaine en élastomère elle-même maintenue contre une des faces de la verrière par un ensemble de plaques d'appui ou de retenue. Cette gaine est ouverte côté verrière et les plaques sont impérativement en acier à ressort ; elles permettent, sans utilisation d'agent adhésif, de maintenir le cordeau détonant contre l'élément transparent de la verrière en exerçant sur ce dernier une pression déterminée par longueur unitaire de cordeau et ceci indépendamment des variations de température. Ces plaques nécessitent également d'être pourvues de traits de scie régulièrement espacés pour leur disposition dans l'habitacle et des plaques de renforcement sont également nécessaires. L'utilisation de plaques en acier à ressort est pénalisante pour des verrières d'avions légers non pressurisés du point de vue du poids. Par ailleurs, le maintien du cordeau détonant dans une gaine souple ouverte du côté de l'appui sur le transparent ne protège pas, en cas d'écrasement au sol, les sauveteurs, des projections de plomb fondu et des éclats de transparent projetés à grande vitesse. Enfin, en cas d'éjection en vol, les gaines, n'étant plus maintenues, risquent de venir gêner les mouvements de l'équipage et peuvent compromettre une évacuation rapide.

La présente invention a justement pour objet un dispositif de maintien d'un cordeau détonant contre un élément transparent de verrière d'avion qui évite ces inconvénients en assurant un découpage efficace de la verrière tout en protégeant l'équipage contre des projections accidentelles de plomb fondu ou d'éclats de transparent.

Selon la principale caractéristique du dispositif objet de l'invention, celui-ci, du genre de ceux qui comprennent une gaine fermée à l'intérieur de laquelle est placé ledit cordeau, comprend en outre une enveloppe externe dont une première partie, entourant complètement la gaine fermée, est maintenue en appui contre l'élément transparent et dont une deuxième partie est fixée à un élément de la structure de l'habitacle de l'avion.

Ce montage permet à l'enveloppe entourant la gaine contenant le cordeau d'agir comme un générateur de gaz, favorisant ainsi une éjection de l'élément transparent à très faible vitesse tout en confinant les produits de la détonation. Le système est ainsi sans danger, aussi bien à l'intérieur qu'à l'extérieur de l'habitacle de l'avion.

Selon une autre caractéristique de ce dispositif, l'élément de la structure de l'habitacle de l'avion est un longeron dont la section a une forme telle qu'elle définit une première surface faisant un angle dièdre avec la surface de l'élément transparent, la partie de l'enveloppe externe entourant la gaine fermée étant maintenue appuyée à la fois contre le transparent et contre la première surface, et une deuxième surface sur laquelle est fixée la deuxième partie de l'enveloppe externe.

Dans un mode de réalisation préféré, l'enveloppe externe présente une première partie de section sensiblement circulaire, et une deuxième partie ayant la forme d'une languette plane fixée à un élément de la structure de l'habitacle de l'avion.

L'enveloppe externe est réalisée de préférence en une toile imprégnée de silicone et polymérisée.

L'invention sera mieux comprise à la lecture de la description qui va suivre, donnée à titre d'exemple purement illustratif et nullement limitatif, en référence aux dessins annexés dans lesquels :

la figure 1 est une vue schématique en coupe illustrant le mode de montage préférentiel du dispositif objet de l'invention contre un élément transparent de verrière d'avion, et

la figure 2 est une vue schématique en coupe montrant de manière plus détaillée la constitution du dispositif conforme à l'invention.

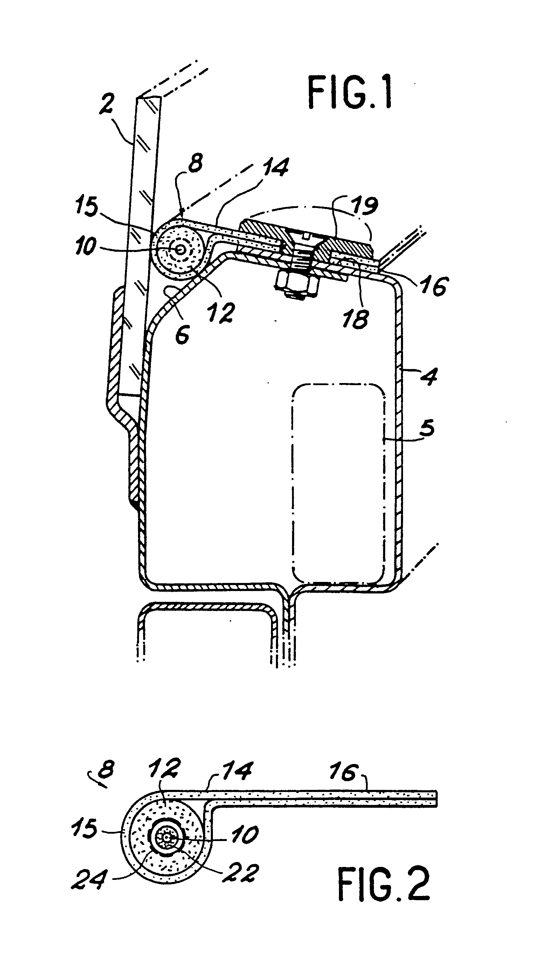

Sur la figure 1, on voit l'élément transparent de verrière 2 contre lequel est placé, du côté intérieur, un longeron 4. Ce dernier se présente comme un tube de section polygonale dont l'une des faces 6 forme un angle dièdre avec la surface de l'élément transparent 2. Dans cet angle est placé le dispositif de maintien du cordeau détonant conforme à l'invention, portant la référence générale 8. On voit que le cordeau détonant 10 est placé à l'intérieur d'une gaine fermée en élastomère 12 de section circulaire, elle-même entourée complètement par une enveloppe externe 14. Dans l'exemple décrit ici, cette enveloppe externe est constituée par une toile imprégnée de silicone et polymérisée dont une première partie 15, de section circulaire, entoure la gaine fermée 12 et dont les bords ont été réunis de manière à former une languette 16. Le longeron 14 présente une face 18, différente de la face 6 mentionnée plus haut, sur laquelle est fixée la languette 16 de la toile 14 à l'aide d'un couvre-joint 19. Cette disposition permet de maintenir la languette 16 contre le profilé 4 et également de maintenir la partie 15 de l'enveloppe 14 en appui à la fois contre le transparent 2 et contre la première face 6 du tube 4.

La figure 2 montre de manière plus détaillée le montage du cordeau détonant 12 à l'intérieur de l'enveloppe externe 14. Sur la figure, on voit le cordeau 10 entouré d'un enrobage de plomb 22, le tout étant enfermé dans une enveloppe interne en téflon 24. Cette dernière est placée à l'intérieur de la gaine fermée 12 qui peut être par exemple en caoutchouc silicone. On voit également l'enveloppe externe 14 dont une partie 15 de section circulaire entoure la gaine fermée 12 tandis que ses deux bords ont été réunis pour former la languette 16 qui est apliquée sur la face 18 dui longeron 4. L'utilisation d'une toile permet de limiter l'élasticité de l'élastomère et concourt au maintien linéaire de la gaine 12 enfermant le cordeau.

Si l'on se reporte à nouveau à la figure 1, on voit qu'à certains endroits le longeron 4 peut être prévu avec une section suffisamment importante pour que l'on puisse y loger un dispositif de mise à feu ou percuteur 5. Lors de la mise à feu, une onde de détonation parcourt le cordeau 10 et engendre une quantité d'énergie transmise instantanément à la gaine 12 appliquée le long du transparent de verrière, ce qui provoque la rupture de ce dernier. Le couvre-joint 19 permet de maintenir la chaîne de transmission pyrotechnique contre le transparent de verrière 2. Cette disposition améliore la projection de l'équipage contre les risques de projections diverses, la gaine en caoutchouc silicone évitant les projections de plomb fondu car l'élasticité du matériau offre à ce dernier la possibilité de gonfler lors du passage de la détonation sans se rompre.

Le dispositif selon l'invention présente des avantages particulièrement intéressants puisqu'il permet une éjection de l'élément transparent à très faible vitesse tout en confinant les produits de la détonation. On ne risque pas de projection de plomb fondu ou des autres produits de la détonation, que ce soit à l'intérieur ou à l'extérieur de l'habitacle. Par exemple, si l'avion s'écrase au sol et si l'équipage n'est pas en état d'agir, les sauveteurs peuvent actionner le percuteur 5 à l'aide d'une poignée située à l'extérieur de l'avion sans craindre des projections de plomb fondu ou des éclats de transparent projetés à grande vitesse. Enfin, l'enveloppe externe 14 maintient le cordeau détonant en l'isolant des vibrations de l'aéronef et le montage assure l'immobilisation de la chaîne de découpage le long du longeron 4 avant et surtout après la mise à feu.

**Revendications**

1. Dispositif de maintien d'un cordeau détonant (10) contre un élément transparent (2) de verrière d'avion, du genre de ceux qui comprennent une gaine fermée (12) à l'intérieur de laquelle est placé ledit cordeau (10), caractérisé en ce qu'il comprend en outre une enveloppe externe (14) dont une première partie (15), entourant complètement la gaine fermée (12), est maintenue en appui contre l'élément transparent (2) et dont une deuxième partie (16) est fixée à un élément (4) de la structure de l'habitacle de l'avion.

2. Dispositif selon la revendication 1, caractérisé en ce que l'élément (4) de la structure de l'habitacle de l'avion est un longeron dont la section a une forme telle qu'elle définit une première surface (6) faisant un angle avec la surface de l'élément transparent, la partie de l'enveloppe externe (14) entourant la gaine fermée (12) étant maintenue appuyée à la fois contre le transparent (2) et contre la première surface (6), et une deuxième surface (18) sur laquelle est fixée la deuxième partie (16) de l'enveloppe externe (14).

3. Dispositif selon l'une quelconque des revendications 1 ou 2, caractérisé en ce que l'enveloppe externe (14) présente une première partie (15) de section sensiblement circulaire, et une deuxième partie (16) ayant la forme d'une languette plane fixée à un élément (4) de la structure de l'habitacle de l'avion.

4. Dispositif selon l'une quelconque des revendications 1 à 3, caractérisé en ce que l'enveloppe externe (14) est réalisée en une toile imprégnée de silicone et polymérisée.

5. Dispositif selon l'une quelconque des revendications 1 à 4, caractérisé en ce que ladite gaine fermée (12) est réalisée en élastomère.

6. Dispositif selon l'une quelconque des revendications 1 à 5, caractérisé en ce que le cordeau détonant (10) est placé à l'intérieur d'une masse de plomb (22) entourée d'une enveloppe interne (24) elle-même disposée à l'intérieur de ladite gaine fermée (12).

7. Dispositif selon la revendication 6, caractérisé en ce que ladite enveloppe interne (24) est réalisée en téflon.

**Claims**

1. Device for holding a detonator fuse (10) against a transparent element (2) of the cockpit cover of an aircraft, of the type comprising a closed sheath (12) within which is located said fuse (10), characterized in that it additionally comprises an external envelope (14) having a first part (15) completely surrounding the closed sheath (12) and held in contact with said transparent element (2), and a second part (16) fixed to an element (4) of the cockpit structure of the aircraft.

2. Device according to Claim 1, characterized in that the element (4) of the cockpit structure of the aircraft is a longeron having a cross section of a form such as to define a first surface (6) forming an angle with the surface of the transparent element, the part of the external envelope (14) surrounding the closed sheath (12) being held simultaneously against the transparent element (2) and against the first surface (6), and a second surface (18) on which is fixed the second part (16) of the external element (14).

3. Device according to either of Claims 1 and 2, characterized in that the external envelope (14) has a first part (15) of substantially circular cross section, and a second part (16) constituting a flat tongue fixed to an element (4) of the cockpit structure of the aircraft.

4. Device according to any one of Claims 1 to 3, characterized in that the external envelope (14) is formed from a cloth impregnated with polymerized silicone.

5. Device according to any one of Claims 1 to 4, characterized in that said closed sheath (12) is formed from an elastomeric material.

6. Device according to any one of Claims 1 to 5, characterized in that the detonator fuse (10) is located within a lead body (22) surrounded by an internal envelope (24) which is itself located inside said closed sheath (12).

7. Device according to Claim 6, characterized in that said internal envelope (24) is formed from teflon.

**Patentansprüche**

1. Vorrichtung zum Festhalten einer Sprengschnur (10) an einem durchsichtigen Element (2) der Verglasung eines Flugzeugs, mit einer geschlossenen Hülle (12), in deren Innerem die Schnur (10) angeordnet ist, dadurch gekennzeichnet, daß sie außerdem eine äußere Umhüllung (14) aufweist, von welcher ein erstes Teil (15) die geschlossene Hülle (12) vollständig umgibt und in Anlage an dem durchsichtigen Element (2) gehalten ist, und von welcher ein zweites Teil (16) an einem Konstruktionselement (4) der Kabine des Flugzeugs befestigt ist.

2. Vorrichtung nach Anspruch 1, dadurch gekennzeichnet, daß das Konstruktionselement (4) der Kabine des Flugzeugs ein Längsträger ist, welcher im Querschnitt eine solche Form aufweist, daß dieser eine erste Oberfläche (6) bildet, welche mit der Oberfläche des durchsichtigen Elements einen Winkel bildet, wobei das die geschlossene Hülle (12) umgebende Teil der äußeren Umhüllung (14) gleichzeitig in Anlage am durchsichtigen Element (2) und an der ersten Oberfläche (6) gehalten ist, und daß der Querschnitt eine zweite Oberfläche (18) bildet, auf welcher das zweite Teil (16) der äußeren Umhüllung (14) befestigt ist.

3. Vorrichtung nach einem der Ansprüche 1 oder 2, dadurch gekennzeichnet, daß die äußere Umhüllung (14) ein erstes Teil (15) von im wesentlichen kreisförmigem Querschnitt und ein zweites Teil (16) aufweist, welches die Form einer ebenen Lasche hat und an einem Konstruktionselement (4) der Kabine des Flugzeugs befestigt ist.

4. Vorrichtung nach einem der Ansprüche 1 bis 3, dadurch gekennzeichnet, daß die äußere Umhüllung (14) aus einem mit Silikon getränkten und polymerisierten Stoff gefertigt ist.

5. Vorrichtung nach einem der Ansprüche 1 bis 4, dadurch gekennzeichnet, daß die geschlossene Hülle (12) aus einem Elastomer gefertigt ist.

6. Vorrichtung nach einem der Ansprüche 1 bis 5, dadurch gekennzeichnet, daß die Sprengschnur (10) in einer Bleimasse (22) angeordnet ist, welche von einer inneren Umhüllung (24) umgeben ist, welche ihrerseits im Inneren der geschlossenen Hülle (12) angeordnet ist.

7. Vorrichtung nach Anspruch 6, dadurch gekennzeichnet, daß die innere Umhüllung (24) aus Teflon gefertigt ist.

FIG.1

FIG.2